# FASCICULE DE BREVET EUROPEEN

(11) **EP 2 521 001 B1**
(45) Date de publication et mention de la délivrance du brevet: **18.09.2013**
(21) Numéro de dépôt: 12165635.9
(22) Date de dépôt: 26.04.2012
(51) Int. Cl.: G06F 1/16, G06F 3/042, G06F 3/041

(54) **Dispositif tactile à clips pour dispositif de visualisation**
Klemmbare, berührungsempfindliche Vorrichtung für Anzeigevorrichtung
Clip-on touch device for a display device

(30) Priorité: 05.05.2011 FR 1101387
(43) Date de publication de la demande: 07.11.2012
(73) Titulaire: Thales, 92200 Neuilly Sur Seine (FR)
(72) Inventeur: Goy, Jean-Marie, 33170 Gradignan (FR); Laret, Daniel, 33160 St Medard En Jalles (FR)
(74) Mandataire: Bréda, Jean-Marc

(56) Documents cités:
- FR-A1- 2 598 253
- US-B1- 6 335 724

## Description

Le domaine de l'invention est celui des dispositifs à écran tactile montés sur des dispositifs de visualisation. L'application principale concerne les écrans d'affichage des planches de bord aéronautiques.

Pour contrôler, modifier ou commander l'affichage de dispositifs de visualisation, il existe différents interfaces homme-machine. Depuis plusieurs années et en particulier dans le domaine grand public de l'informatique ou de la téléphonie, on utilise des écrans tactiles pour réaliser ces interfaces, l'utilisateur modifie les données d'un système d'affichage soit directement avec sa main, soit au moyen d'un stylet.

Différents principes techniques permettent de réaliser des écrans tactiles. On peut utiliser des principes électroniques où l'approche d'un objet de l'écran modifie localement un paramètre électrique comme une résistance ou une capacité. On peut également utiliser des dispositifs optiques reposant sur l'emploi de sources de lumière et de micro-caméras qui captent les images des objets au voisinage de l'écran et déterminent l'emplacement des objets par triangulation. Le brevet US 6 335 724 propose un dispositif tactile optique de ce type.

Pour des raisons de coût, d'encombrement et de fiabilité, les surfaces tactiles utilisées dans le domaine grand public ou dans d'autres domaines ne sont pas démontables et font partie intégrante du dispositif de visualisation.

Dans le domaine aéronautique, certains avionneurs souhaitent adapter les systèmes de visualisation de leurs planches de bord de façon qu'ils comportent des écrans tactiles de commande. Une première solution consiste à remplacer les systèmes de visualisation actuels sans écrans tactiles par des systèmes avec écran tactile intégré. Cette solution est extrêmement coûteuse dans la mesure où elle nécessite le rétrofit complet de la planche de bord avec les problèmes de certification et d'immobilisation que cela entraîne.

Le brevet FR 2 598 253 propose un dispositif modulaire comportant une surface tactile. Cependant, ce dispositif ne permet pas une mise en place à la fois sûre et rapide. Le dispositif tactile selon l'invention ne présente pas ses inconvénients. Il possède un écran tactile comportant des moyens d'accrochage et une connectique adaptée permettant de se fixer simplement sur un grand nombre de dispositifs de visualisation sans avoir à les modifier ou à les démonter.

Plus précisément, l'invention a pour objet un dispositif tactile comportant au moins un écran tactile sensiblement rectangulaire comprenant deux montants latéraux et deux montants transversaux, ledit dispositif tactile pouvant être relié à un dispositif de visualisation comprenant au moins une face avant, une face arrière et une poignée de verrouillage située en face avant et comportant deux bras latéraux la face avant dudit dispositif de visualisation comportant quatre évidements, **caractérisé en ce que** l'écran tactile comporte au moins, fixés sur les montants, deux clips de fixation et deux clips de maintien adaptés auxdits évidements, l'ensemble des quatre clips pouvant assurer la fixation de l'écran tactile sur la face avant du dispositif de visualisation lorsque la poignée de verrouillage est en position verrouillée, les clips de maintien étant bloqués par les bras latéraux de ladite poignée de verrouillage.

Avantageusement, le dispositif tactile comporte une électronique de commande et de traitement reliée au cadre de détection par une liaison électronique, ladite électronique pouvant être reliée à la face arrière du dispositif de visualisation au moyen d'une connectique électrique.

Avantageusement, l'écran tactile comporte des moyens optiques de détection de la position d'un objet situé à l'intérieur du cadre. Ces moyens de détection sont des micro-caméras disposées le long des montants du cadre de détection et des bandes rétro-réfléchissantes disposées sur le pourtour interne du cadre de détection.

Avantageusement, les clips de fixation sont fixés sur les montants latéraux de l'écran tactile et sont en forme de U majuscule et les clips de maintien sont fixés sur les montants latéraux de l'écran tactile et sont en forme de L majuscule.

Avantageusement, le dispositif de visualisation est un dispositif de visualisation aéronautique destiné à être intégré à une planche de bord d'aéronef.

L'invention sera mieux comprise et d'autres avantages apparaîtront à la lecture de la description qui va suivre donnée à titre non limitatif et grâce aux figures annexées parmi lesquelles :
La figure 1 représente un écran tactile selon l'invention et le dispositif de visualisation associé avant fixation ;
La figure 2 représente une vue partielle d'un clip de fixation lorsque l'écran tactile est monté sur le dispositif de visualisation ;
La figure 3 représente une vue partielle d'un clip de maintien lorsque l'écran tactile est monté sur le dispositif de visualisation.

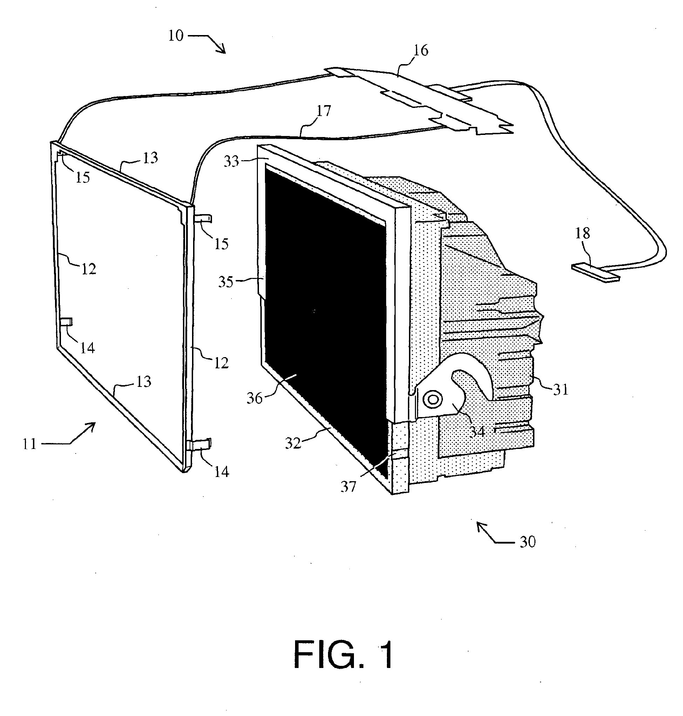

A titre d'exemple non limitatif, la figure 1 représente une vue en perspective d'un dispositif tactile 10 selon l'invention et le dispositif de visualisation 30 associé avant fixation du cadre de détection.

Le dispositif tactile 10 fonctionne, dans le cas présent, par détection optique. D'autres techniques de détection comme la détection électronique sont compatibles de l'invention.

Le dispositif tactile comporte :
- un écran tactile 11 en forme de cadre sensiblement rectangulaire et comprenant :
   ○ deux montants latéraux 12 et deux montants transversaux 13 ;
   ○ deux clips de fixation 14 et deux clips de maintien 15 fixés sur les montants latéraux 12. Dans le cas de la figure 1, les clips de fixation sont situés dans le bas des montants latéraux et les clips de maintien dans le haut des bras latéraux. Cette disposition peut être modifiée pour s'adapter à d'autres types de visualisation ;
   ○ des illuminateurs et deux micro-caméras logés dans les montants transversaux 13 et non représentés sur la figure 1 ;
   ○ des bandes rétro-réfléchissantes disposées sur le pourtour interne des montants latéraux et transversaux de l'écran tactile 11 également non représentées sur la figure 1 ;
- une électronique de commande et de traitement 16 reliée à l'écran tactile 11 par des liaisons électroniques 17 et comprenant une connectique électrique 18.

Le principe de fonctionnement de l'écran tactile est le suivant. Les illuminateurs éclairent les bandes rétro-réfléchissantes . En l'absence d'objet à l'intérieur du cadre de l'écran tactile, les micro-caméras captent un signal lumineux constant. En présence d'objet à l'intérieur du cadre, celui-ci crée des ombres sur les images fournies par les micro-caméras. La position de ces ombres dans les images est représentative de la position de l'objet à l'intérieur du cadre. Les images sont traitées par l'électronique de commande et de traitement 16.

Le dispositif de visualisation 30 comporte principalement un boîtier 31 renfermant l'électronique de commande et de génération des images affichées, une face avant 32 comprenant un écran de visualisation 36, généralement à cristaux liquides. Ce dispositif est connu sous l'appellation « LCD » signifiant « Liquid Crystal Display ». Le dispositif de visualisation comporte une poignée de verrouillage 33 située en face avant et permettant de bloquer le dispositif de visualisation dans une planche de bord au moyen de cames de verrouillage 34. Cette poignée 33 comporte deux bras latéraux 35 permettant d'actionner les cames de verrouillage 34. En position verrouillée, les bras latéraux 35 de la poignée 33 sont en appui sur la face avant 32.

La fixation mécanique de l'écran tactile 11 sur le dispositif de visualisation 30 est assurée par les quatre clips de fixation et de maintien. Elle se fait de la façon suivante.

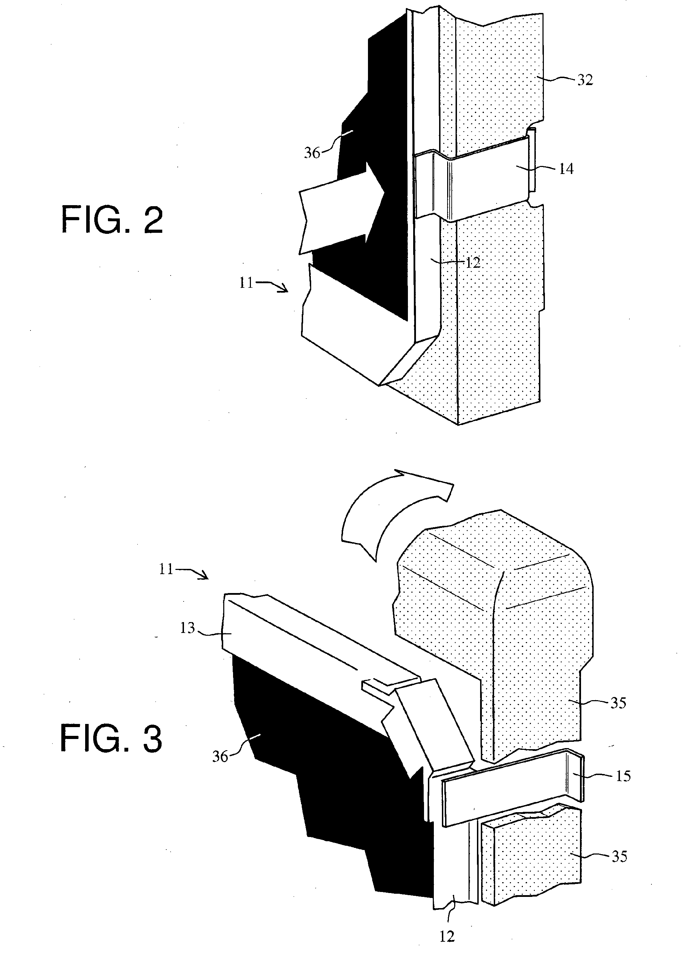

La poignée 33 étant déverrouillée, on vient insérer les deux clips de fixation 14 de l'écran tactile 11 sur les côtés de la face avant 32 en jouant sur l'élasticité des clips 14 comme on le voit sur la figure 2. La face avant comporte des évidements 37 réservés à ces clips. Dans un grand nombre d'applications, ces évidements existent d'origine et sont utilisés pour la mise en place d'un écran de protection de la face avant, utile durant les phases de production et d'assemblage du LCD. La flèche blanche de la figure 2 indique le sens de déplacement du cadre de détection pendant la mise en place des clips de fixation. La forme des clips 14 est adaptée à la forme des évidements 37 de la face avant de façon que le jeu résiduel des clips dans leurs évidements soit proche de zéro. Ainsi, le positionnement horizontal et vertical de l'écran tactile 11 est parfaitement déterminé. La précision de ce positionnement détermine la précision de la désignation tactile en utilisation opérationnelle.

Généralement, les clips de fixation 14 sont en forme de U majuscule. Ils peuvent être réalisés dans des lames d'acier élastique. Après cette opération, le cadre de détection de l'écran tactile est alors en place sur la face avant.

On positionne alors la poignée de verrouillage 33 en position verrouillée. La flèche blanche de la figure 3 indique le mouvement de rotation de la poignée. Les bras latéraux 35 viennent alors bloquer les deux clips de maintien 15. Généralement, les clips de maintien sont en forme de L majuscule. Ils peuvent également être réalisés dans des lames d'acier élastique. La longueur de ces clips 15 est légèrement plus courte que l'épaisseur de la poignée à cet endroit de façon à assurer un bon serrage des clips de maintien 15 et une immobilisation parfaite de l'écran tactile. Le cadre de détection de l'écran tactile 11 est alors bloqué contre la face avant 32.

On connecte enfin à l'arrière du dispositif de visualisation l'électronique de commande et de traitement au moyen de sa connectique électrique 18. Le dispositif tactile est alors opérationnel.

Les avantages principaux du dispositif tactile selon l'invention sont :
- la simplicité des aménagements mécaniques du cadre de détection du dispositif tactile pour s'adapter à un dispositif de visualisation ;
- Dans la plupart des applications, l'absence totale d'aménagements du dispositif de visualisation comportant le dispositif tactile ;
- la facilité et la rapidité de mise en place du dispositif tactile sur le dispositif de visualisation qui se fait sans outils ;
- la précision de mise en place et l'immobilisation parfaite de l'écran tactile ;
- la totale invisibilité du montage, une fois le dispositif tactile installé sur son dispositif de visualisation.

## Revendications

1. Dispositif tactile (10) comportant au moins un écran tactile (11) sensiblement rectangulaire comprenant deux montants latéraux (12) et deux montants transversaux (13), ledit dispositif tactile pouvant être relié à un dispositif de visualisation (30) comprenant au moins une face avant (32), une face arrière et une poignée de verrouillage (33) située en face avant et comportant deux bras latéraux (35), la face avant dudit dispositif de visualisation comportant quatre évidements (37) ;
**caractérisé en ce que** l'écran tactile (11) comporte au moins, fixés sur les montants (12), deux clips de fixation (14) et deux clips de maintien (15) adaptés auxdits évidements, l'ensemble des quatre clips (14, 15) pouvant assurer le positionnement et la fixation de l'écran tactile (11) sur la face avant (32) du dispositif de visualisation lorsque la poignée de verrouillage est en position verrouillée, les clips de maintien (15) étant bloqués par les bras latéraux de ladite poignée.

2. Dispositif tactile selon la revendication 1, **caractérisé en ce que** ledit dispositif tactile comporte une électronique de commande et de traitement (16) reliée à l'écran tactile par une liaison électronique (17), ladite électronique pouvant être reliée à la face arrière du dispositif de visualisation au moyen d'une connectique électrique (18).

3. Dispositif tactile selon la revendication 1, **caractérisé en ce que** l'écran tactile (11) comporte des moyens optiques de détection de la position d'un objet situé à l'intérieur du cadre de l'écran tactile.

4. Dispositif tactile selon la revendication 3, caractérisé en ce les moyens de détection sont des micro-caméras disposées le long des montants de l'écran tactile et des bandes rétro-réfléchissantes disposées sur le pourtour interne du cadre de détection.

5. Dispositif tactile selon la revendication 1, **caractérisé en ce que** les clips de fixation (14) sont fixés sur les montants latéraux de l'écran tactile et sont en forme de U majuscule.

6. Dispositif tactile selon la revendication 1, **caractérisé en ce que** les clips de maintien (15) sont fixés sur les montants latéraux de l'écran tactile et sont en forme de L majuscule.

## Patentansprüche

1. Berührungsempfmdliche Vorrichtung (10), die mindestens einen im Wesentlichen rechteckigen berührungsempfindlichen Bildschirm (11) aufweist, der zwei seitliche Holme (12) und zwei transversale Holme (13) umfasst, wobei die berührungsempfindliche Vorrichtung mit einer Anzeigevorrichtung (30) verbindbar ist, die mindestens eine Vorderseite (32), eine Rückseite und einen Verriegelungsgriff (33), der sich auf der Vorderseite befindet und zwei seitliche Arme (35) aufweist, umfasst, wobei die Vorderseite der Anzeigevorrichtung vier Aussparungen (37) aufweist,
**dadurch gekennzeichnet, dass** der berührungsempfmdliche Bildschirm (11) mindestens zwei Befestigungsklemmen (14) und zwei an die Aussparungen angepasste Halteklemmen (15) aufweist, die an den Holmen (12) befestigt sind, wobei die Gruppe der vier Klemmen (14, 15) die Positionierung und die Befestigung des berührungsempfindlichen Bildschirms (11) auf der Vorderseite (32) der Anzeigevorrichtung sicherstellen kann, wenn der Verriegelungsgriff in verriegelter Stellung ist, wobei die Halteklemmen (15) von den seitlichen Armen des Griffs blockiert werden.

2. Berührungsempfindliche Vorrichtung nach Anspruch 1, **dadurch gekennzeichnet, dass** die berührungsempfindliche Vorrichtung eine Steuer- und Verarbeitungselektronik (16) aufweist, die mit dem berührungsempfindlichen Bildschirm durch eine elektronische Verbindung (17) verbunden ist, wobei die Elektronik mit der Rückseite der Anzeigevorrichtung mittels einer elektrischen Anschlusstechnik (18) verbunden sein kann.

3. Berührungsempfindliche Vorrichtung nach Anspruch 1, **dadurch gekennzeichnet, dass** der berührungsempfindliche Bildschirm (11) optische Mittel zur Detektion der Position eines Objekts aufweist, das sich innerhalb des Rahmens des berührungsempfindlichen Bildschirms befindet.

4. Berührungsempfindliche Vorrichtung nach Anspruch 3, **dadurch gekennzeichnet, dass** die Detektionsmittel Mikrokameras sind, die entlang der Holme des berührungsempfindlichen Bildschirms angeordnet sind und rückreflektierende Streifen, die auf dem inneren Umfang des Detektionsrahmens angeordnet sind.

5. Berührungsempfindliche Vorrichtung nach Anspruch 1, **dadurch gekennzeichnet, dass** die Befestigungsklemmen (14) auf den seitlichen Holmen des berührungsempfindlichen Bildschirms befestigt sind und die Form eines U als Großbuchstabe haben.

6. Berührungsempfindliche Vorrichtung nach Anspruch 1, **dadurch gekennzeichnet, dass** die Halteklemmen (15) auf den seitlichen Holmen des berührungsempfindlichen Bildschirms befestigt sind und die Form eines L als Großbuchstabe haben.

## Claims

1. A tactile device (10) comprising at least one substantially rectangular touch screen (11) comprising two lateral uprights (12) and two transverse uprights (13), said tactile device being designed to be connected to a display device (30) comprising at least one front face (32), one rear face and one locking handle (33) located on the front face and comprising two lateral arms (35), the front face of said display device comprising four recesses (37);
**characterised in that** said touch screen (11) comprises, fixed to said uprights (12), at least two fixing clips (14) and two retaining clips (15) adapted to said recesses, all four clips (14, 15) being designed to ensure the positioning and the fixing of said touch screen (11) on said front face (32) of said display device when said locking handle is in the locked position, said retaining clips (15) being blocked by said lateral arms of said handle.

2. The tactile device according to claim 1, **characterised in that** said tactile device comprises control and processing electronics (16) connected to said touch screen via an electrical connection (17), said electronics being designed to be connected to said rear face of said display device by means of an electrical connector (18).

3. The tactile device according to claim 1, **characterised in that** said touch screen (11) comprises optical means for detecting the position of an object located inside the frame of said touch screen.

4. The tactile device according to claim 3, **characterised in that** said detection means are micro-cameras disposed along said uprights of said touch screen and retro-reflecting strips disposed on the internal periphery of the detection frame.

5. The tactile device according to claim 1, **characterised in that** said fixing clips (14) are fixed to said lateral uprights of said touch screen and are U-shaped.

6. The tactile device according to claim 1, **characterised in that** said retaining clips (15) are fixed to said lateral uprights of said touch screen and are L-shaped.
